# FASCICULE DE BREVET EUROPEEN

(11) **EP 0 616 977 B1**
(45) Date de publication et mention de la délivrance du brevet: **06.10.1999**
(21) Numéro de dépôt: 94400587.5
(22) Date de dépôt: 17.03.1994
(51) Int. Cl.: C02F 1/48

(54) **Dispositif magnétique étagé anti-tartre**
Magnetische Stufen-Antikesselsteinvorrichtung
Stepwise magnetic anti-scaling device

(30) Priorité: 17.03.1993 FR 9303066
(43) Date de publication de la demande: 28.09.1994
(73) Titulaire: Thoraval, Gilles, F-36260 Reuilly (FR)
(72) Inventeur: Thoraval, Gilles, F-36260 Reuilly (FR)
(74) Mandataire: Bruder, Michel

(56) Documents cités:
- GB-A- 2 209 030
- GB-A- 2 257 932
- US-A- 4 367 143
- US-A- 4 888 113
- US-A- 4 946 590

## Description

La présente invention a pour objet un perfectionnement au dispositif de prévention de la formation du tartre dans les canalisations d'eau, les appareils de chauffage, chauffe-eau, robinets ou toute autre machine industrielle et appareil ménager utilisant de l'eau contenant du carbonate de calcium.

Il est bien connu que l'eau distribuée dans les villes comprend une proportion plus ou moins importante de carbonate de calcium à l'état dissous ; suite aux chocs thermiques qui se produisent en particulier à la sortie des chauffe-eau, le carbonate de calcium a pour particularité de se cristalliser au moins partiellement sous forme de calcite qui est un cristal à trois axes magnétiques. On sait que la calcite, plus couramment désigné sous le vocable de tartre, est après un certain temps responsable de nombreux dommages dans les canalisations d'eau. Pour pallier ces inconvénients, il existe deux grandes catégories de traitement de l'eau :
- Les adoucisseurs constitués par des filtres contenant des résines échangeuses d'ions, qui permettent d'éliminer dans une installation, les sels dissous dans l'eau. L'inconvénient de ce traitement, est qu'il est obligatoire de régénérer les résines après un certain temps d'utilisation. Par ailleurs tous les sels sont en principe éliminés y compris, bien entendu, ceux qui sont utiles à l'homme dans sa consommation d'eau potable.
- Les dispositifs du type électromagnétiques qui permettent d'effectuer un apport d'électrons dans l'eau destiné à modifier la structure des molécules de carbonate de calcium. Malheureusement, de tels dispositifs introduisent dans les canalisations, des vibrations importantes pouvant se traduire par l'apparition de fuites notamment au point de raccordement des canalisations.
- On connaît enfin les dispositifs antitartre à fonctionnement statique ne nécessitant aucun apport d'énergie extérieure ni de produits chimiques. Ces dispositifs sont constitués pour l'essentiel d'aimants permanents venant entourer la canalisation à traiter selon des constructions magnétiques parfaitement déterminées.

On connaît déjà un dispositif magnétique pour le traitement de l'eau circulant dans une canalisation décrit dans la demande de brevet français numéro FR-92.14223 [FR-A-2701309] au nom du même demandeur, qui est apte à provoquer lors d'une cristallisation du carbonate de calcium triaxe, sa mutation totale ou partielle en cristal d'aragonite uniaxe, non incrustant, le dispositif comprenant au moins une paire d'aimants permanents disposés en regard de part et d'autre de la canalisation, suivant le même axe magnétique, coïncidant avec un diamètre de la même canalisation, lesdits aimants étant par ailleurs maintenus autour de ladite canalisation par un étrier de fixation ; le dispositif se caractérise en ce que les aimants sont disposés de telle manière que leurs pôles en regard de part et d'autre de la canalisation soient de même nom et en ce que l'étrier de fixation n'occasionne aucun court-circuit magnétique entre les mêmes aimants.

On observera que de tels dispositifs antitartre utilisent généralement des moyens magnétiques permanents développant des champs magnétiques souvent très puissants qui ont la particularité entre autres de provoquer un déplacement des charges magnétiques des molécules de carbonate de calcium, les empêchant de cristalliser sous forme de tartre. On sait également que les résultats obtenus grâce à ce type de matériel résultent surtout de la qualité des ferrites utilisées, à savoir des ferrites anisotropes du type oxonyte 290 qui permettent d'arracher un électron à la molécule de carbonate de calcium qui, après avoir subit un choc thermique, cristallise sous forme d'aragonite et non pas sous forme de calcite.

On rappellera ici que les ferrites anisotropes sont telles qu'après magnétisation définitive, le champ magnétique se trouve à 80 % perpendiculaire à la pièce aimantée, ce qui permet d'orienter plus facilement le flux et obtenir une densité magnétique nettement supérieure à celle d'un aimant classique.

La présente invention à pour but d'accroître encore l'efficacité des dispositifs antitartre entrant dans cette dernière catégorie c'est-à-dire les antitartres à aimants permanents, et plus particulièrement les antitartres munis de deux jeux de ferrites anisotropes du type oxonyte 290, que l'on étage le long de la canalisation à traiter.

On connaît déjà un antitartre étagé à aimant permanent par le brevet US-4 367 143 formé de deux paires d'aimants disposés de part et d'autre d'une canalisation de telle façon que les pôles en regard soient de même nom par exemple Nord sur la première paire et Sud sur la deuxième paire, maintenues entre elles par un étrier métallique.

Selon cette construction on crée un court-circuit magnétique par l'extérieur des aimants, aboutissant à des pertes de flux et donc à une rapide désaimantation de l'ensemble.

Pour palier cet inconvénient, il est proposé un dispositif magnétique selon l'invention permettant le traitement de l'eau circulant dans une canalisation apte à provoquer lors d'une cristallisation du carbonate de calcium triaxe, sa mutation au moins partielle en cristal d'aragonite uniaxe, non incrustant, comprend deux paires d'aimants permanents étagées sur la canalisation, côte à côte, l'une en aval de l'autre, et maintenues par un étrier de fixation, les aimants de chaque paire étant disposés en regard de part et d'autre de ladite canalisation suivant le même axe magnétique coïncidant avec un diamètre de ladite canalisation de telle sorte que les pôles en regard soient de même nom ; ce dispositif dont la polarité magnétique des aimants en regard de la deuxième paire est inverse de la polarité de la première paire située en amont sur la canalisation à traiter, se caractérise en ce que l'étrier de fixation des deux paires d'aimants est magnétiquement isolé.

Naturellement et selon une caractéristique secondaire de la présente invention, le dispositif se caractérise aussi en ce que les deux paires d'aimants sont maintenues espacées l'une de l'autre sur la canalisation d'au moins quelques centimètres. On notera à cet égard, que le choix de la polarité des aimants en regard pour la première paire située en amont de la canalisation n'a pas d'incidence remarquable sur le résultat du traitement, il est donc indifférent que la première paire soit du type nord-nord ou sud-sud.

D'autres caractéristiques et avantages de l'invention apparaîtront mieux dans la description qui va suivre, d'une exécution particulière du dispositif magnétique conforme à l'invention, donné à titre d'exemple non limitatif en référence au dessin annexé sur lequel :
- La figure 1 représente un schéma de principe du fonctionnement magnétique du dispositif antitartre conforme à l'invention, les flèches de la figure représentant les diverses orientations des molécules de carbonate de calcium après passage sous les paires d'aimants permanents,
- La figure 2 est une vue en perspective du dispositif étagé selon l'invention tel qu'il est monté sur une canalisation à traiter.

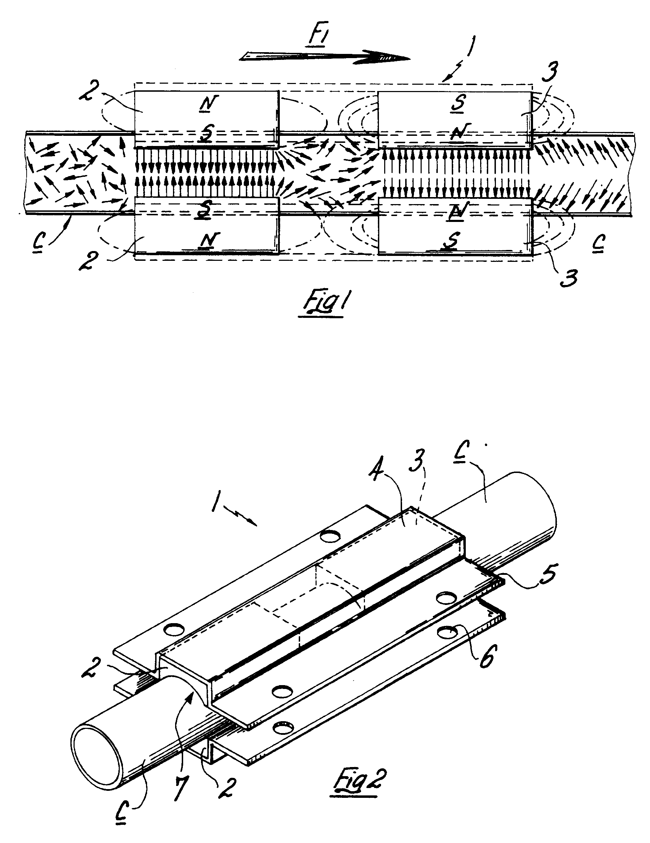

Conformément à la figure 1 on a représenté une canalisation C dans laquelle circule de l'eau chargée de sels minéraux dont en particulier du carbonate de calcium dans le sens de la flèche F1, telles que représentées sur la gauche de la figure en aval du dispositif 1, les molécules symbolisées par de petites flèches sont animées d'un mouvement brownien et se répartissent normalement dans toutes les directions.

Lorsque l'eau pénètre à l'intérieur de la première paire d'aimants 2 dont on a choisi la polarité sud pour les aimants en contact avec la canalisation C, on observe une première orientation des molécules en direction du centre de la canalisation ; à la sortie de la paire d'aimants 2, les lignes de champs magnétiques sont, de manière connue, courbes, ce qui tend à orienter radialement les molécules de carbonate ; elles prennent alors des directions différentes en fonction de leur position à l'intérieur de la canalisation C.

Après un parcourt de quelques centimètres entre les deux paires d'aimants, lesdites molécules pénètrent alors dans l'espace défini par la seconde paire d'aimants 2 dont les aimants en contact avec la canalisation C sont maintenant polarisés nord.

Les molécules sont alors orientées à 180° par rapport à la direction prise au passage sous la paire d'aimants 2. L'action du champ magnétique parallèle nord s'effectue principalement sur les protons qui ont une charge électrique positive alors que précédemment, le champ magnétique sud procurait ses effets sur les électrons de charge électrique négative. Les molécules subissent ainsi très rapidement, en fonction de la vitesse d'écoulement de l'eau dans la canalisation C, une double orientation et ce, en quelques fractions de secondes. Ceci a pour premier but de stabiliser ces molécules ; bien entendu, toutes les molécules d'eau ou de sel dissous subissent la même action, mais la seule transformation qui subsistera après le choc magnétique est celle qui conserne précisément les atomes de carbonate de calcium.

En sortie de la seconde paire d'aimants 3 c'est-à-dire après avoir traversé tout le dispositif 1, les molécules de carbonate de calcium s'orientent tangentiellement aux lignes de champ magnétique qui tendent naturellement à se refermer vers l'extérieur suivant une représentation en traits mixtes fins sur la figure 1 ; on constate alors que les molécules se répartissent selon deux directions inclinées par rapport à l'axe de la canalisation C ce qui est particulièrement favorable puisque cette orientation évite, comme on l'a vu, un fort taux de cristallisation.

En outre, lorsque les molécules de carbonate de calcium cristallisent sous forme d'aragonite uniaxe, après un choc thermique par exemple, cette cristallisation n'a aucun caractère incrustant, c'est-à-dire que les cristaux précipités sont normalement entraînés par le flux d'eau.

Selon une description pratique du dispositif présenté en perspective sur la figure 2, celui-ci se compose essentiellement d'un étrier 4 comportant deux supports en forme de U d'où s'étendent latéralement deux ailes perpendiculaires 5 ; celles-ci sont avantageusement percées de trous 6 qui permettent une fixation de l'étrier 4 par vis non métalliques ou par liens souples, autour des deux paires d'aimants 2 et 3 disposées côte à côte le long de la canalisation C. Il est important que la fixation ainsi réalisée ne vienne pas contribuer à fermer le circuit magnétique par l'extérieur des aimants 2 et 3, ce qui conduirait à des pertes de flux et à une désaimantation accélérée.

Dans la variante préférée du dispositif selon l'invention, les moyens magnétiques consistent pour l'essentiel en deux paires d'aimants 2 et 3 disposées le long de la canalisation C de telle manière que les faces en appui sur la canalisation C de la première paire d'aimants 2 soient du type sud et que réciproquement, les faces en contact de la canalisation C de la paire d'aimants 3 soient du type nord ; par ailleurs, entre la première paire d'aimants disposée en amont de la canalisation et la deuxième paire en aval, on a pu observer qu'il convient d'aménager une distance suffisante pour éviter toute interaction magnétique entre les deux paires d'aimants ; en pratique cet espace est de l'ordre de quelques centimètres. Par ailleurs, lesdites faces d'appui des aimants sur la canalisation C présentent avantageusement une concavité 7 en forme de secteur cylindrique dont le rayon est le plus proche possible du rayon de la canalisation C de manière à procurer un effet magnétique maximum.

Il est évident que cette disposition particulière, si elle est avantageuse en terme de rendement, ne constitue pas une obligation pour un fonctionnement général du dispositif antitartre conforme à l'invention.

Selon une caractéristique importante quoique secondaire, il est prévu que l'ensemble des pièces magnétiques soient recouvertes d'un revêtement susceptible de les isoler électriquement afin d'empêcher un contact direct des aimants avec la canalisation C surtout lorsque celle-ci est en matériau magnétique tel que le fer ou ses alliages, ce qui provoquerait alors une diminution très rapide de l'effet magnétique du dispositif.

Bien entendu, la puissance du dispositif peut être également ajustée par des longueurs d'aimants plus ou moins grandes, et il a été observé que la dimension longitudinale (selon l'axe de la canalisation (C) devait être plus importante que la dimension transversale des aimants (i.e. sa largeur) par rapport à la canalisation C.

S'agissant enfin de l'épaisseur des aimants de base, formant les paires 2 ou 3, on a remarqué qu'un fonctionnement optimal était obtenu en ajustant l'épaisseur de chaque aimant formant une paire, depuis une valeur minimum correspondant à environ un tiers de la largeur de l'aimant jusqu'à un maximum égal à la largeur de l'aimant ; on observera que pour obtenir une telle variation, il est proposé d'empiler des lames aimantées sur la partie plane externe de chaque aimant formant une paire, en disposant la nouvelle lame de forme parallélipipédique selon une polarité série avec l'aimant de base ou la lame précédente.

Le dispositif 1 ainsi réalisé donne d'excellents résultats sur les précipités de carbonate de calcium qui cristallisent pratiquement totalement sous la forme d'aragonite uniaxe.

## Revendications

1. Dispositif magnétique étagé pour le traitement des molécules de carbonate de calcium de l'eau circulant dans une canalisation (C) comprenant deux paires d'aimants permanents (2,3) disposées sur la canalisation (C) à distance, l'une en aval de l'autre, suffisante pour procurer des effets électrodynamiques inverses sur les atomes de carbonate de calcium, et maintenues par un étrier de fixation (4), les aimants de chaque paire (2,3) étant disposés en regard de part et d'autre de la canalisation (C) suivant le même axe magnétique coïncidant avec un diamètre de la canalisation (C), de telle sorte que les pôles en regard soient de même nom, la polarité magnétique des aimants en regard de la deuxième paire (3) étant inverse de celle de la première paire (2) en amont sur la canalisation (c), **caractérisé** en ce que l'étrier (4) est magnétiquement isolé.

2. Dispositif selon la revendication précédente **caractérisé** en ce que les deux paires d'aimants (2,3) sont espacées l'une de l'autre sur la canalisation (C) d'au moins quelques centimètres.

3. Dispositif selon l'une quelconque des revendications précédentes **caractérisé** en ce que les faces des aimants (2,3) sont concaves pour s'adapter au rayon de ladite canalisation (C).

4. Dispositif selon l'une quelconque des revendications précédentes **caractérisé** en ce que chaque aimant (2,3) d'une paire, résulte d'un empilage de lames aimantées dont les polarités sont en série et dont la hauteur d'empilage est au moins égale à un tiers de la largeur des aimants et au plus égale à cette largeur.

5. Dispositif selon l'une quelconque des revendications précédentes **caractérisé** en ce que les aimants (2,3) sont revêtus d'un matériau électriquement isolant évitant au moins le contact direct avec la canalisation (C).

6. Dispositif selon l'une quelconque des revendications précédentes **caractérisé** en ce que les aimants (2,3) sont des ferrites anisotropes.

7. Dispositif selon la revendication précédente **caractérisé** en ce que les ferrites sont du type oxonyte 290.

## Claims

1. Staged magnetic device for the treatment of calcium carbonate molecules in water circulating in a pipe (C) comprising two pairs of permanent magnets (2, 3) placed on the pipe (C), one at a sufficient distance downstream from the other to create inverse electrodynamic effects on the calcium carbonate atoms and held in place by an attachment clamp (4), the magnets on each pair (2, 3) being placed facing each other on each side of the pipe (C) along the same magnetic axis coincident with a diameter of the pipe (C), such that the poles facing each other are of the same type, the magnetic polarity of the magnets facing the second pair (3) being opposite to the polarity of the first pair (2) upstream on the pipe (C), characterized in that the clamp (4) is magnetically insulated.

2. Device according to the previous claim, characterized in that the spacing along the pipe (C) between the two pairs of magnets (2, 3) is at least a few centimeters.

3. Device according to any one of the previous claims, characterized in that the faces of the magnets (2, 3) are concave to adapt to the radius of the said pipe (C).

4. Device according to any one of the previous claims, characterized in that each magnet (2, 3) in a pair consists of a stack of magnetized strips, the polarities of which are in series and in which the stacking height is not less than one third of the width of the magnets, and not more than this width.

5. Device according to any one of the previous claims characterized in that the magnets (2, 3) are coated with an electrically insulating material avoiding at least direct contact with the pipe (C).

6. Device according to any one of the previous claims, characterized in that the magnets (2, 3) are anisotropic ferrites.

7. Device according to the previous claim, characterized in that the ferrites are of the oxonyte 290 type.

## Patentansprüche

1. Gestufte magnetische Vorrichtung für die Behandlung von Kalziumkarbonatmolekülen des in einer Kanalisation (c) fliessenden Wassers, mit zwei Dauermagnetpaaren (2, 3), die eins nach dem anderen auf der Kanalisation (C) in einem ausreichenden Abstand angeordnet sind, um an den Kalziumkarbonatatomen umgekehrte elektrodynamische Wirkungen auszulösen, und die von einem Befestigungsbügel (4) festgehalten werden, wobei die Magneten eines jeden Paares (2, 3) gegenüberliegend und auf beiden Seiten der Kanalisation (C) nach der gleichen magnetischen Achse, die mit einem Durchmesser der Kanalisation (C) zusammenfällt, angeordnet sind, so dass die sich gegenüberliegenden Pole den gleichen Namen tragen, wobei die magnetische Polarität der Magnete gegenüber dem zweiten Paar (3) die umgekehrte derjenigen des ersten Paares (2) vor der Kanalisation (C) ist, dadurch gekennzeichnet, dass der Bügel (4) magnetisch isoliert ist.

2. Vorrichtung nach dem vorstehend genannten Anspruch, dadurch gekennzeichnet, dass die beiden Magnetpaare (2, 3) auf der Kanalisation (C) in einem Abstand von mindestens einigen Zentimetern angeordnet sind.

3. Vorrichtung nach einem der vorstehend genannten Ansprüche, dadurch gekennzeichnet, dass die Seiten der Magneten (2,3) konkav sind, um sich dem Radius der besagten Kanalisation (C) anzupassen.

4. Vorrichtung nach einem der vorstehend genannten Ansprüche, dadurch gekennzeichnet, dass jeder Magnet (2, 3) eines Paares das Ergebnis eines Aufstapelns von Magnetlamellen ist, deren Polaritäten in Serie sind und deren Stapelhöhe zumindest einem Drittel der Breite der Magneten und höchstens dieser Breite entspricht.

5. Vorrichtung nach einem der vorstehend genannten Ansprüche, dadurch gekennzeichnet, dass die Magneten (2, 3) mit einem elektrisch isolierenden Material beschichtet sind, das zumindest den direkten Kontakt mit der Kanalisation (C) vermeidet.

6. Vorrichtung nach einem der vorstehend genannten Ansprüche, dadurch gekennzeichnet, dass die Magneten (2, 3) anisotrope Ferrite sind.

7. Vorrichtung nach dem vorstehend genannten Anspruch, dadurch gekennzeichnet, dass die Ferrite des Typs Oxonyt 290 sind.
